# EUROPÄISCHE PATENTANMELDUNG

(11) **EP 1 564 951 A2**
(43) Veröffentlichungstag der Anmeldung: **17.08.2005**
(21) Anmeldenummer: 05100372.1
(22) Anmeldetag: 21.01.2005
(51) Int. Cl.: H04L 25/02

(54) **Stromversorgung und Datennetz**

(30) Priorität: 10.02.2004 DE 102004006507
(71) Anmelder: Siemens Aktiengesellschaft, 80333 München (DE)
(72) Erfinder: Schiff, Andreas, Dr., 88097 Eriskirch (DE); Wiesgickl, Bernhard, 92249 Vilseck (DE)

(57) **Zusammenfassung**

Aufgabe der Erfindung ist es, Reflexionen und Eigenschwingungen in einem Netzwerk wie einem AS-Interface so zu verhindern, dass die Signalamplituden ausreichend vorhanden bleiben. Ein erfindungsgemäßes Netzwerk, insbesondere ein AS-Interface, weist daher eine Spannungsversorgung und ein mit der Spannungsversorgung verbundenes, durchlaufendes, zweiadriges Netzwerkkabel auf. An dem Netzwerkkabel sind wenigstens zwei Kommunikationseinrichtungen angeschlossen. Am Netzwerkkabel ist darüber hinaus ein Netzwerkabschluss angeordnet, welcher eine Reihenschaltung aus einer Kapazität, einem Widerstand und einer Induktivität umfasst.

## Beschreibung

Die vorliegende Erfindung betrifft ein Netzwerk, insbesondere ein AS-Interface, sowie einen Netzwerkabschluss für Netzwerke mit einem durchlaufenden zweiadrigen Netzwerkkabel.

AS-Interface-Netze werden insbesondere im Anlagenbau, in der Fördertechnik und in der Gebäudetechnik zur Kommunikation mehrerer Kommunikationseinrichtungen miteinander verwendet. Dabei handelt es sich bei den Netzwerkkomponenten meistens um einen sogenannten Master und einer Anzahl von Slaves, wobei der Master den Ablauf der Kommunikation steuert. Dabei ist zur Kommunikation der Kommunikationseinrichtungen miteinander ein Netzwerkkabel vorgesehen, an welches auch eine Spannungsversorgung angeschlossen ist, so dass die Kommunikationseinrichtungen, die auch Aktoren und Sensoren umfassen, über das Netzwerkkabel mit der erforderlichen Betriebsspannung und Antriebsenergie versorgt werden. Dabei ist es üblich, dass das AS-Interface-Netz (Aktor-Sensor-Interface) als offenes Netz mit beliebiger Topologie (Baumstruktur) geführt, d. h. es ist kein gesonderter Netzwerkabschluss vorgesehen. Aufgrund des Signalverlaufes in einem solchen offenen Netzwerk ist die maximale Übertragungslänge von Signalen in der Praxis auf Kabellängen im Bereich von ca. 100 m (Summe aller Kabellängen) begrenzt, soweit kein Repeater eingesetzt wird. Repeater haben den Nachteil, dass sie ein zusätzliches Bauteil sind, eine galvanische Trennung von hintereinander liegenden Leitungsabschnitten vornehmen und daher eine eigene Spannungsversorgung benötigen.

Eine Ursache für die Begrenzung der möglichen Kabellängen für die Übertragung von Signalen ist die Verzerrung des Übertragungssignals durch Reflexionen am nicht abgeschlossenen Ende der Leitung. Diese Reflexionen bewirken ein Phänomen einer rücklaufenden Welle des Signals vom Kabelende, die sich dem Nutzsignal überlagern. Darüber hinaus treten jedoch auch noch Schwingungen auf, die dem Signalimpuls folgen. Die Frequenz der Schwingungen, die als Störsignal auftreten, ist dabei von den Leistungsparametern des Kabels und der Kabellänge abhängig. Ihre Amplitude kann bis zu ca. 50 % der Amplitude eines Einzelimpulses erreichen, wobei es sich um eine Eigenschwingung des Kabels handeln kann, die durch den Signalimpuls angeregt worden ist. Beide auftretenden Störsignale bewirken Amplitudenverzerrungen und Überschwingungen in den Signalen auf dem Netzwerkkabel. Sie verhindern gemeinsam, dass eine fehlerfreie Kommunikation über eine Entfernung von mehr als ca. 100 m (maximal 130 bis 140 m) stattfinden kann. Dieses Problem in der Kommunikation bei derartigen Netzwerken und derartige Netzwerkstrukturen sind beispielsweise in H. Kitayama et al.: "Development of SwitchNet as an Optimal Network for the Field-End Components in the Fields of Factory Automation", Idec Review, 2002, Vol. 18 No. 2 beschrieben.

Eine nahe liegende Lösung die Reflexionsprobleme auf der Signalstrecke zu unterdrücken bestünde darin, einen Netzwerkabschluss vorzusehen, der aus einem Widerstand R und einer Kapazität C besteht, die in Reihe miteinander geschaltet sind, wie dies beispielsweise in "Fieldbus Wiring Design and Installation Guide, Relcom Inc., Forrest Grove, Oregon 97116, USA auf Seite 4" in anderem Zusammenhang beschrieben ist. Eine derartige Lösung ist jedoch bei einem AS-Interface nicht anwendbar, weil dadurch die Signale der Slaves auf dem Bus durch den Abschlusswiderstand derart gedämpft werden, dass eine sichere Kommunikation nicht mehr gewährleistet ist.

Aufgabe der Erfindung ist es daher, Reflexionen und Eigenschwingungen in einem Netzwerk wie einem AS-Interface so zu verhindern, dass die Signalamplituden ausreichend vorhanden bleiben. Durch diese Maßnahme kann dann die Ausdehnungslänge eines AS-Interface-Netzes über die bisherigen möglichen Netzlängen hinaus ohne Repeater ermöglicht werden. Dies ist beispielsweise in der Prozess- und Verfahrenstechnik oder in der Gebäudeautomatisierung deshalb von Bedeutung, weil die an das AS-Interface-Netz anzuschließenden Teilnehmer häufig in großen Abstand voneinander positioniert sind und somit eine möglichst große Netzwerklänge ohne Repeater realisiert werden soll.

Die der Erfindung zugrunde liegende Aufgabe wird durch ein Netzwerk gemäß dem unabhängigen Anspruch gelöst. Ein erfindungsgemäßer Netzwerkabschluss stellt eine besonders bevorzugte Komponente für die Lösung des der Erfindung zugrunde liegenden technischen Problems dar.

Ein erfindungsgemäßes Netzwerk, insbesondere ein AS-Interface, weist eine Spannungsversorgung und ein mit der Spannungsversorgung verbundenes, durchlaufendes, zweiadriges Netzwerkkabel auf. An dem Netzwerkkabel sind wenigstens zwei Kommunikationseinrichtungen angeschlossen. Am Netzwerkkabel ist darüber hinaus ein Netzwerkabschluss angeordnet, welcher eine Reihenschaltung aus einer Kapazität, einem Widerstand und einer Induktivität umfasst.

Durch diesen Netzwerkabschluss und die im Netzwerkabschluss enthaltene Induktivität wird erreicht, dass die Signalamplituden der Kommunikationseinrichtungen ausreichend groß bleiben, so dass eine sichere Kommunikation über größere Entfernungen als die seither üblichen Entfernungen ermöglicht wird, ohne dass ein Signalverstärker wie ein Repeater verwendet werden muss. Auch eine gesonderte Anpassung der Spezifikationen der bisher üblichen AS-Interface ist nicht erforderlich.

Gemäß einer bevorzugten Ausgestaltung der Erfindung ist die Spannungsversorgung an einem Ende des Netzwerkkabels angeordnet. Der Netzwerkabschluss ist vorzugsweise in einem bezüglich der Spannungsversorgung distalen Endbereich des Netzwerkkabels angeschlossen. Der Endbereich des distalen Endes umfasst dabei vorzugsweise die letzten 30 %, insbesondere die letzten 10 %, der Kabellänge des Netzwerkkabels. Die Anordnung des Netzwerkabschlusses verhindert unerwünschte Reflexionen und andere Störsignale aufgrund von Eigenschwingungen im Bereich des Netzwerkkabels, welche durch Signale induziert werden können. Der Netzwerkabschluss kann dabei gemäß weiterführender bevorzugter Ausgestaltung der Erfindung zwar genau am distalen Ende des Kabels angeordnet sein, die Möglichkeit den Netzwerkabschluss aber im Bereich der letzten 30 % oder der letzten 10 % der Kabellänge anzuordnen, erlaubt eine höhere Flexibilität in Bezug auf die Montage. Doch muss gewährleistet sein, dass der Netzwerkabschluss am Ende oder in der Nähe des Endes des Netzwerkkabels montiert ist.

Gemäß bevorzugter Ausgestaltung der Erfindung ist die Impedanz des Netzwerkabschlusses an die Impedanz des Netzwerkkabels annähernd (unter Berücksichtigung der Signalamplituden) angepasst. Vorzugsweise sollte die Impedanz des Netzwerkabschlusses jedoch größer als die des Netzwerkkabels sein. Die Impedanz des Netzwerkkabels ergibt sich aus den physikalischen Gegebenheiten des Kabels, also aus den verwendeten Isolierungen, Materialien und Aderquerschnitten. Durch die Anpassung der Impedanz von Netzwerkabschluss an Netzwerkkabel wird eine effektive Unterdrückung von reflektierten Signalen erreicht. Gemäß bevorzugter Ausgestaltungen der Erfindungen liegt die Länge des Netzwerkkabels oberhalb von 100 m und befindet sich vorzugsweise im Bereich von mehr als 200 m bis über 300 m. Durch die Verwendung des an sich passiven Netzwerkabschlusses, der keinerlei eigene Versorgungsenergie benötigt, wird es ermöglicht die Leitungslängen eines Netzwerkkabels auf ein Mehrfaches, insbesondere auf das Zwei- bis Dreifache, der bisher üblichen Netzwerklängen auszudehnen, ohne dass ein Repeater Verwendung finden müsste. Durch diese Maßnahme wird die Flexibilität des Netzwerkes höher und gleichzeitig eine gute Signalqualität und sichere Kommunikation ermöglicht.

Das Netzwerk kann auch aus mehreren Netzwerkkabeln bestehen, wobei sowohl parallel zueinander geschaltete als auch seriell zueinander geschaltete Netzwerkkabel vorliegen können. Alle Netzwerkkabel, deren Kabellänge einen Grenzwert übersteigt, dessen Größe vorzugsweise im Bereich bisher üblicher Netzwerkkabellängen liegt - also im Bereich von ca. 100 m -, weisen einen Kabelabschluss auf. Seriell zueinander geschaltete Netzwerkkabel sind über Repeater miteinander zu verbinden, wobei die freie Kabellänge zwischen zwei Repeatern bzw. zwischen dem Kabelbeginn und einem Repeater dann in Bereichen liegen kann, wie sie nunmehr mit der Verwendung von Kabelabschlüssen ermöglicht wird.

Durch diese Maßnahme wird in vorteilhafter Weise gewährleistet, dass die flexible Netzwerkstruktur aufrecht erhalten werden kann. Die Zahl benötigter Repeater wird verringert, die Struktur des Netzwerkes kann jedoch gleich bleiben, wie sie bisher üblich ist. Dabei müssen nicht zwingend Kabelabschlüsse vorgesehen werden, wenn in Teilbereichen die Kabellänge von Netzwerkkabeln den Grenzwert nicht übersteigen.

Durch einen Netzwerkabschluss gemäß der Erfindung wird es ermöglicht, zweidrahtige bzw. zweiadrige Netzwerkkabel, wie sie beispielsweise bei AS-Interface-Netzwerken Verwendung finden, eine Verbesserung der Signalqualität auf dem Netzwerk zu erreichen. Derartige Netzwerkabschlüsse für Netzwerke mit einem durchlaufenden zweiadrigen Netzwerkkabel beinhalten insbesondere eine Reihenschaltung aus Kapazität, Widerstand und Induktivität. Die Netzwerkabschlüsse sind als gesondertes Bauteil ausgebildet und können auch bei bestehenden Netzwerken nachgerüstet werden.

Gemäß erfindungsgemäßer Ausgestaltung eines entsprechenden Netzwerkabschlusses weist dieser eine Impedanz auf, die der Impedanz des verwendeten Netzwerkkabels entspricht. Der Wert der Impedanz liegt insbesondere im Bereich von 90 Ohm. Es kann insbesondere vorgesehen sein, dass die Kapazität des Netzwerkabschlusses bei 500 nF, die Induktivität des Netzwerkabschlusses bei 100 µH und der Widerstand des Netzwerkabschlusses 110 Ohm beträgt. Ein derartiger Netzwerkabschluss ermöglicht es, eine hinreichende Signalqualität aus Netzwerken aufrecht zu erhalten, deren Kabellänge beträchtlich länger ist, als bisher übliche Kabellängen. Die Anpassung der Impedanz des Netzwerkabschlusses an die des Netzwerkkabels stellt dabei eine möglichst effiziente Wirkung des Netzwerkabschlusses sicher. Die angegebenen Werte gelten dabei insbesondere für die Verwendung bei einem AS-Interface und stellen bevorzugte Richtwerte dar, die für die Verwendung bei üblichen AS-Interfaces gebräuchlichen Kabel entsprächen.

In weiterführender vorteilhafter Ausgestaltung kann vorgesehen sein, dass wenigstens eines der Elemente aus Kapazität, Widerstand und Induktivität regelbar ausgebildet ist. Durch diese Maßnahme wird eine Anpassung des Netzwerkabschlusses an die tatsächlichen Gegebenheiten im Netzwerk ermöglicht. Dadurch wird die Signalübertragung auf dem Netzwerkkabel optimierbar. Es entspricht bevorzugter Ausgestaltung der Erfindung, wenn Widerstand und/oder Induktivität variabel gestaltet sind. Durch die vorgeschlagenen Maßnahmen wird es ermöglicht, dass die Anpassung an die Gegebenheiten des vorliegenden Netzwerkes, wie sie etwa durch Verwendung eines Kabels mit abweichenden Leitungsparametern oder bei anderen Kabellängen erforderlich sein kann, vorgenommen werden kann. Das Optimieren der Induktivität kann dabei insbesondere nach einem der Optimierungskriterien aus der Rate der im Netzwerk als fehlerhaft erkannten Telegramme, die Zykluszeit bzw. des Jitters der Zykluszeit sein. Auch der Signalverlauf an sich, die Signalamplitude, das Verhältnis von größter zu kleinster Amplitude in einem Signaltelegramm bzw. des Überschwingers am Ende eines Telegramms und dergleichen können alternativ oder ergänzend als Optimierungskriterium dienen. Das Optimieren kann dabei beispielsweise durch Abgreifen des Signals am Netzwerkkabel und durch entsprechendes Einrichten der variablen Größen im Sinne des Erzielens eines vorgegebenen Signalbilds erfolgen.

In einer bevorzugten Ausgestaltung der Erfindung kann vorgesehen sein, dass der Netzwerkabschluss eine automatische Regeleinrichtung für das wenigsten eine regelbare Element aus Kapazität, Induktivität und Widerstand vorsieht. Die Regelung für das wenigstens eine regelbare Element aus Kapazität, Induktivität und Widerstand erfolgt dabei gemäß bevorzugter Ausgestaltung in Abhängigkeit wenigstens eines vorgegebenen, messbaren und automatisch analysierbaren Optimierungskriterium. Durch die automatische Regeleinrichtung ist es möglich, in für den Benutzer einfacher Weise die Anpassung des Netzwerkabschlusses an die tatsächlichen Gegebenheiten im Netzwerk vorzunehmen. Dabei ist es durchaus möglich, dass die energetische Versorgung der Regeleinrichtung für den Netzwerkabschluss über das Netzwerk selbst erfolgt. Somit ist keine gesonderte Energieversorgung für die automatische Regelung erforderlich, sondern diese wird über das Netzwerk vorgenommen und ist ohnehin verfügbar. Durch die automatische Regelung ist es insbesondere nicht erforderlich, manuell mehrere unabhängig voneinander wirkende Stellparameter zu verändern um eine Optimierung durchzuführen, wodurch der Optimierungsprozess beschleunigt werden kann. Darüber hinaus wird es in vorteilhafter Weiterführung der Ausgestaltung ermöglicht, dass in variablen Netzen, also Netzen, deren Länge sich während des Betriebes verändert - wie dies etwa bei einem Anschluss von Slaves über Stromschienen der Fall sein kann - die Kompensation auch laufend adaptiv nachgeführt und so beständig eine optimale Verbindungsqualität im Netzwerk aufrecht erhalten wird.

Zur einfachen Bedienung und Montage des Netzwerkabschlusses am Netzwerkkabel kann es vorgesehen sein, dass der Netzwerkabschluss einen Anschlussverbinder aufweist, der beim Befestigen des Netzwerkabschlusses auf dem Netzwerkkabel selbsttätig eine elektrische Verbindung zum Netzwerkkabel herstellt.

Dabei ist die elektrische Verbindung so geschaltet, dass die beiden Adern des Netzwerkkabels mit den beiden Anschlussenden der Reihenschaltung aus Kapazität, Widerstand und Induktivität verbunden sind.

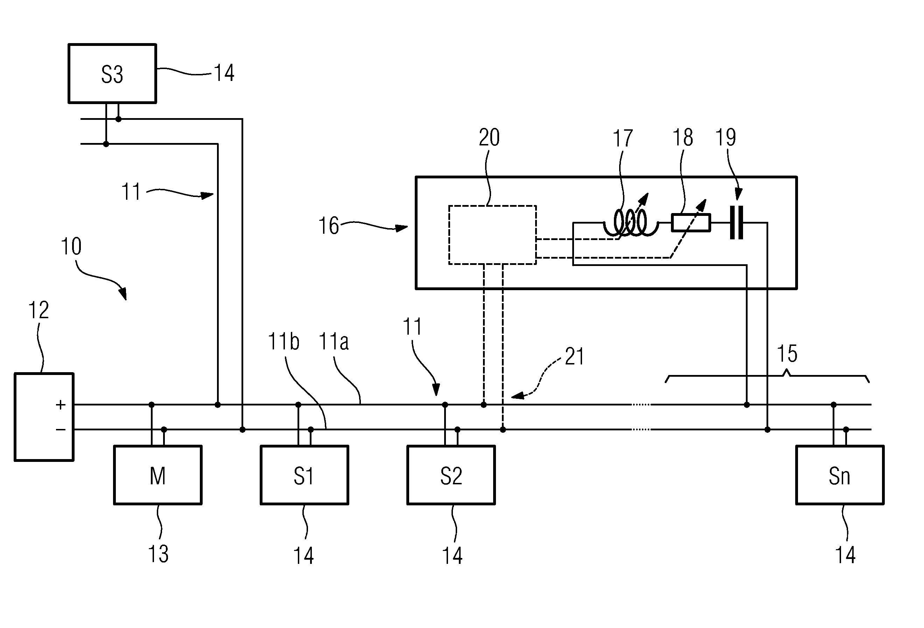

Im Übrigen ist die Erfindung auch nachfolgend anhand des in der Zeichnung dargestellten Ausführungsbeispiels näher erläutert. Dabei zeigt die einzige Figur in schematischer Darstellung ein AS-Interface mit einem erfindungsgemäßen ausgestalteten Netzwerkabschluss. In strichlierter Darstellung ist dabei die Möglichkeit der automatischen Regeleinrichtung, welche optional vorgesehen sein kann, aber nicht zwingend erforderlich ist, dargestellt.

Die einzige Figur zeigt ein AS-Interface-Netzwerk, kurz auch AS-Interface 10 genannt, welches aus einem zweidrahtigen bzw. zweiadrigen Netzwerkkabel 11 einer Spannungsversorgung 12, und einer Anzahl von Kommunikationseinrichtungen 13, 14 besteht. Dabei handelt es sich bei den Kommunikationseinrichtungen 13, 14 um einen sogenannten Master 13 sowie eine Anzahl von Slaves 14, wobei die Kommunikation mit den Slaves 14 auf dem Netzwerkkabel 11 durch den Master 13 gesteuert abläuft.

Die Spannungsversorgung 12 ist dabei am einen Ende des Netzwerkkabels 11 angeordnet. Das Netzwerkkabel 11 weist dabei eine große Erstreckungslänge auf, so dass auch weitere Slaves 14 abgesehen von den dargestellten am Netzwerkkabel 11 angeordnet sein können. Bei den Slaves 14 kann es sich dabei sowohl um Aktoren als auch um Sensoren handeln, wobei die Energieversorgung der Slaves 14 genauso wie die des Masters 13 über die beiden Adern 11a, 11b des Netzwerkkabels 11 erfolgt. Hierzu wird über die Spannungsversorgung 12 zwischen den beiden Adern 11a und 11b eine Gleichspannung erzeugt.

Der Repeater empfängt auf der Eingangsseite ein Signal und leitet es auf die Ausgangsseite weiter, wobei der Repeater bidirektional arbeitet und über eine eigene, von einem Netzwerkkabel 11 getrennte Spannungsversorgung verfügt und auf das ihm zugeordnete weitere Netzwerkkabel 11 die Spannungsversorgung beaufschlagt, wobei das Signal der Versorgungsspannung überlagert ist. Die beiden Netzwerkkabel 11 sind dabei im Repeater galvanisch voneinander getrennt.

Sobald die Länge eines Netzwerkkabels einen vorgegebenen Grenzwert, beispielsweise 100 m übersteigt, wird an dem Netzwerkkabel ein Netzwerkabschluss 16 im Endbereich 15 des Netzwerkkabels angeschlossen und mit diesem verbunden. Der Endbereich 15 des Netzwerkkabels 11 umfasst dabei insbesondere die letzten 10 % der Kabellänge des Netzwerkkabels 11, wobei entgegen dem dargestellten Ausführungsbeispiel auch eine Anordnung am Ende des Netzwerkkabels möglich ist.

Der Netzwerkabschluss 16 beinhaltet dabei in Reihe miteinander geschaltet eine Induktivität 17, einen Widerstand 18 und eine Kapazität 19. Dabei können Induktivität 17, Kapazität 19 und Widerstand 18 so aufeinander abgestimmt sein und solche Werte annehmen, dass die Impedanz der Reihenschaltung der Impedanz des Netzwerkkabels annähernd entspricht. So kann die Impedanz des Netzwerkanschlusses bei 90 Ohm liegen, Beispielswerte für Widerstand, Kapazität und Induktivität sind 110 Ohm, 500 nF und 100 µH. Die Reihenschaltung wird dabei beim Anbringen des Netzwerkabschlusses 16 am Netzwerkkabel 11 kontaktiert, so dass die Reihenschaltung zwischen die beiden Adern 11a und 11b des Netzwerkkabels 11 geschaltet und mit diesen verbunden ist.

Gemäß einer vorteilhaften Ausgestaltung kann ein Netzwerkabschluss auch die gestrichelt dargestellten Funktionselemente aufweisen. Dabei ist in der Zeichnung dargestellt, dass die Induktivität 17 und der Widerstand 18 regelbar ausgebildet sind und eine Regeleinrichtung 20 im Netzwerkabschluss 16 enthalten ist, welche eine Anpassung der Werte für Impedanz von Induktivität 17 und elektrischem Widerstand 18 derart vornimmt, dass das Signal auf dem Netzwerkkabel 11 hinsichtlich eines oder mehrerer Qualitätskriterien optimiert ist. Die Qualitätskriterien entsprechen dabei einer Anpassung der Impedanz der Abschlusseinrichtung an die des Netzwerkkabels, wobei die Anpassung auch im laufenden Betrieb nachführbar sein kann. Hierzu kann vorgesehen sein, dass die Regeleinrichtung 20 über eine eigene, gesonderte Anbindung 21 an das Netzwerkkabel verfügt. Dabei dient die Anbindung 21 zum einen der Energieversorgung der Regeleinrichtung 20 über das Netzwerkkabel 11 sowie zum Abgreifen des Signals, das auf dem Netzwerkkabel verfügbar ist, so dass das Signal in der Regeleinrichtung 20 hinsichtlich einem oder mehrerer Qualitätskriterien überprüfbar ist und die Werte von Impedanz 17 und Widerstand 18 entsprechend einer Optimierung dieses wenigstens einen Qualitätskriteriums vorgenommen werden kann.

## Patentansprüche

1. Netzwerk, insbesondere AS-Interface (10), mit einer Spannungsversorgung (12) und einem mit der Spannungsversorgung (12) verbundenen, durchlaufenden, zweiadrigen Netzwerkkabel (11), an welchem wenigstens zwei Kommunikationseinrichtungen (13, 14) angeschlossen sind, **dadurch gekennzeichnet, dass** am Netzwerkkabel (11) ein Netzwerkabschluss (16) angeordnet ist, welcher eine Reihenschaltung aus Kapazität (19), Widerstand (18) und Induktivität (17) umfasst.

2. Netzwerk nach Anspruch 1, **dadurch gekennzeichnet, dass** die Spannungsversorgung (12) an einem Ende des Netzwerkkabels (11) und der Netzwerkabschluss (16) in einem bezüglich der Spannungsversorgung (12) distalen Endbereich des Netzwerkkabels (11) angeschlossen ist, wobei der Endbereich (15) des distalen Endes die letzten 30 %, insbesondere die letzten 10 % der Kabellänge des Netzwerkkabels (11) umfasst.

3. Netzwerk nach Anspruch 2, **dadurch gekennzeichnet, dass** der Netzwerkabschluss (16) am bezüglich der Spannungsversorgung (12) distalen Ende des Netzwerkkabels angeordnet ist.

4. Netzwerk nach einem der vorangegangenen Ansprüche, **dadurch gekennzeichnet, dass** die Impedanz des Netzwerkabschlusses (16) größer ist als die Impedanz des Netzwerkkabels (11).

5. Netzwerk nach einem der vorangegangenen Ansprüche, **dadurch gekennzeichnet, dass** die Länge des Netzwerkkabels (11) oberhalb von 100 m und vorzugsweise im Bereich von 200 m bis ca. 300 m liegt.

6. Netzwerk nach einem der vorangegangenen Ansprüche, **dadurch gekennzeichnet, dass** das Netzwerk mehrere Netzwerkkabel (11) aufweist, wobei parallel zueinander geschaltete Netzwerkkabel (11) und seriell zueinander geschaltete Netzwerkkabel (11) vorliegen können, wobei alle Netzwerkkabel (11) deren Kabellänge einen Grenzwert übersteigt, einen Kabelanschluss (16) aufweisen und vorzugsweise zwischen seriell zueinander geschalteten Netzwerkkabeln (11) ein Repeater angeordnet ist.

7. Netzwerkabschluss für Netzwerke mit einem durchlaufenden zweiadrigen Netzwerkkabel (11), insbesondere Netzwerke nach einem der vorhergehenden Ansprüche, **dadurch gekennzeichnet, dass** der Netzwerkabschluss (16) eine Reihenschaltung aus Kapazität (19), Widerstand (18) und Induktivität (17) beinhaltet.

8. Netzwerkabschluss nach Anspruch 7, **dadurch gekennzeichnet, dass** die Impedanz des Netzwerkabschlusses (16) größer ist als die Impedanz des verwendeten Netzwerkkabels (11).

9. Netzwerkabschluss nach Anspruch 8, **dadurch gekennzeichnet, dass** die Impedanz im Bereich von 90 Ohm liegt.

10. Netzwerkabschluss nach Anspruch 7 oder 8, **dadurch gekennzeichnet, dass** die Kapazität (19) ungefähr 500 nF, die Induktivität (17) ungefähr 100 µH und der Widerstand (18) ca. 110 Ohm beträgt.

11. Netzwerkabschluss nach einem der Ansprüche 7 bis 10, **dadurch gekennzeichnet, dass** wenigstens eines der Elemente aus Kapazität (19), Widerstand (18) und Induktivität (17) regelbar ausgebildet ist.

12. Netzwerkabschluss nach Anspruch 11, **dadurch gekennzeichnet, dass** der Abschluss (16) eine automatische Regeleinrichtung (20) für das wenigstens eine regelbare Element aus Kapazität (19), Induktivität (17) und Widerstand (18) aufweist, wobei die Regeleinrichtung (20) das wenigstens eine regelbare Element in Abhängigkeit wenigstens eines vorgegebenen, messbaren Optimierungskriteriums regelt.

13. Netzwerkabschluss nach Anspruch 12, **dadurch gekennzeichnet, dass** das Regeln des wenigstens einen regelbaren Elements durch die automatische Regeleinrichtung (20) im Betrieb des Netzwerkes erfolgt.

14. Netzwerkabschluss nach einem der Ansprüche 7 bis 13, **dadurch gekennzeichnet, dass** der Netzwerkabschluss (16) einen Anschlussverbinder aufweist, der beim Befestigen des Netzwerkabschlusses (16) auf dem Netzwerkkabel (11) selbsttätig eine elektrische Verbindung zum Netzwerkkabel herstellt, bei der die Reihenschaltung aus Kapazität (19), Widerstand (18) und Induktivität (17) mit den beiden Adern (11a, 11b) des Netzwerkkabels (11) verbunden sind.
